# EUROPÄISCHE PATENTSCHRIFT

(11) **EP 3 062 001 B1**
(45) Veröffentlichungstag und Bekanntmachung des Hinweises auf die Patenterteilung: **18.07.2018**
(21) Anmeldenummer: 15156607.2
(22) Anmeldetag: 25.02.2015
(51) Int. Cl.: F16K 11/074

(54) **Ventiloberteil**
Upper part of a valve
Partie supérieure de soupape

(43) Veröffentlichungstag der Anmeldung: 31.08.2016
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- EP-A1- 0 577 164
- WO-A1-00/23168
- DE-U1-202005 003 127
- GB-A- 2 402 199
- US-A- 6 029 699

## Beschreibung

Die Erfindung betrifft ein Ventiloberteil zur gleichzeitigen Steuerung zweier voneinander getrennter Fluidströme für Sanitärarmaturen mit den Merkmalen des Oberbegriffs des Patentanspruchs 1.

In Sanitärarmaturen werden häufig Ventiloberteile eingesetzt, in denen eine Steuerscheibe sowie eine Durchlassscheibe aufweisende Scheibensteuerung angeordnet ist, welche über eine Spindel derart bedienbar ist, dass der Wasseraustritt über eine Drehung der Spindel steuerbar ist. Derartige austauschbare Ventiloberteile, wie sie beispielsweise in der DE 20 2005 003 127 U1 beschrieben sind, können in unterschiedlich gestalteten Armaturengehäusen eingesetzt werden. In zunehmendem Maße wird das aus einer Armatur zu entnehmende Wasser zuvor einem Filtermodul zugeführt, um dessen Qualität zu verbessern. Nachteilig hierbei ist, dass sämtliches durch die Armatur zu entnehmendes Wasser durch das Filtermodul geleitet wird, also auch solches Wasser, das lediglich als Spülwasser oder sonstiges Brauchwasser verwendet wird. Hierdurch wird das Filtermodul stark beansprucht, wodurch die Standzeit reduziert ist. Weitere Ventiloberteile sind in der EP 0 577 164 A1 sowie der WO 00/23168 beschrieben.

Hier will die Erfindung Abhilfe schaffen. Der Erfindung liegt die Aufgabe zugrunde, ein Ventiloberteil zu schaffen, das eine gegenläufige Steuerung zweier voneinander getrennter Fluidströme zur bedarfsgerechten Entnahme beispielsweise von minderwertigem Spülwasser oder hochwertigem Filterwasser ermöglicht. Gemäß der Erfindung wird diese Aufgabe durch die Merkmale des kennzeichnenden Teils des Patentanspruchs 1 gelöst.

Mit der Erfindung ist ein Ventiloberteil geschaffen, das eine gegenläufige Steuerung zweier voneinander getrennter Fluidströme zur bedarfsgerechten Entnahme beispielsweise von minderwertigem Spülwasser oder hochwertigem Filterwasser ermöglicht. Dadurch, dass in der Steuerscheibe Verbindungskanäle derart angeordnet sind, dass in zwei unterschiedlichen Drehstellungen der Steuerscheibe relativ zur Durchlassscheibe alternativ ein erster Einlasskanal und der erste Auslaufkanal oder der zweite Einlasskanal mit dem zweiten Auslaufkanal verbindbar ist, wobei zugleich der jeweils andere Einlasskanal verschlossen ist, ist eine gleichzeitige Steuerung von zwei separaten Fluidströmen bewirkt, wobei eine Vermischung der beiden Fluidströme verhindert ist. Die beiden Auslaufkanäle dienen der Entnahme des jeweiligen Fluids, beispielsweise von Spülwasser oder Filterwasser.

In Weiterbildung der Erfindung ist die Steuerscheibe derart ausgebildet, dass in einer weiteren Drehstellung der Steuerscheibe relativ zur Durchlassscheibe beide Einlasskanäle verschließbar sind. Hierdurch ist eine vollständige Absperrung beider Fluidströme ermöglicht.

In Ausgestaltung der Erfindung weisen die Spindel und das Kopfstück miteinander korrespondierende Rastmittel auf, über welche die Spindel in den unterschiedlichen Drehstellungen einrastbar ist. Hierdurch sind definierte Drehstellungen der Spindel und damit der Steuerscheibe relativ zur Durchlaufscheibe erzielt.

In weiterer Ausgestaltung der Erfindung sind die Rastmittel durch wenigstens ein in dem Kopfstück oder an der Spindel federnd gelagertes Sperrelement gebildet, das bei Drehung der Spindel in wenigstens eine in die Spindel bzw. in das Kopfstück eingebrachte Ausnehmung einrastbar ist. Dabei ist das wenigstens eine Sperrelement vorzugsweise zylindrisch oder kugelförmig ausgebildet. Hierdurch ist ein Hinein- und Hinausgleiten eines jeweiligen Sperrelements in die bzw. aus der jeweiligen Ausnehmung erleichtert.

In Weiterbildung der Erfindung ist wenigstens ein Verbindungskanal kreisbogenförmig ausgebildet. Hierdurch ist eine gute Verbindung von Einlass- und Auslaufkanal über eine Drehung der Steuerscheibe relativ zur Durchlassscheibe erzielt.

In Ausgestaltung der Erfindung ist der zweite Auslaufkanal durch wenigstens ein in dem Kopfstück eingebrachtes seitliches Fenster gebildet, wobei ein Verbindungskanal durch einen Ausschnitt gebildet ist, über den der zweite Einlasskanal mit dem seitlichen Fenster des Kopfstücks in einer Drehstellung der Steuerscheibe verbindbar ist. Hierdurch ist ein seitlicher Austritt des Fluids des zweiten Einlasskanals bei gleichzeitigem Verschluss des ersten Einlasskanals durch die Steuerscheibe ermöglicht.

In alternativer Ausgestaltung der Erfindung ist der zweite Auslaufkanal zusätzlich zu dem ersten Ablaufkanal in dem Bodenstück angeordnet, wobei in der Steuerscheibe zwei Verbindungskanäle eingebracht sind, über die der erste Einlasskanal und der erste Auslaufkanal in einer Drehstellung der Steuerscheibe relativ zur Durchlassscheibe sowie der zweite Einlasskanal und der zweite Auslaufkanal in einer weiteren Drehstellung der Steuerscheibe relativ zur Durchlassscheibe verbindbar sind. Hierdurch ist ein bodenseitiger Austritt des Fluids des zweiten Einlasskanals bei gleichzeitigem Verschluss des ersten Einlasskanals durch die Steuerscheibe ermöglicht.

In weiterer Ausgestaltung der Erfindung ist das Kopfstück aus Metall, vorzugsweise aus Messing hergestellt. Hierdurch ist eine Verformung des Kopfstücks durch die Vorspannung des Ventiloberteils gegen die Armatur auch über einen langen Zeitraum verhindert.

In Weiterbildung der Erfindung sind innerhalb des Kopfstücks zwei Anschläge angeordnet, durch welche die Rotation der Spindel auf einen Drehwinkel begrenzt ist. Dabei weist die Spindel bevorzugt einen weitgehend quaderförmigen oder kreissektorförmigen Abschnitt auf, der zwei parallele oder winklig zueinander angestellte gerade Flanken aufweist, die an jeweils einen Anschlag des Kopfstücks anschlagbar sind, wodurch der Drehwinkel der Spindel (2) begrenzt ist. Vorteilhaft wirken die Flanken derart mit den Anschlägen des Kopfstücks zusammen, dass der maximale Drehwinkel der Spindel auf 115 Grad begrenzt ist. Es kann aus Gründen der Armaturgestaltung z.B. begründet durch begrenzt verfügbarem Bedienungsraum, auch ein maximaler Drehwinkel von 90 Grad vorgesehen sein.

Gegenstand der Erfindung ist weiterhin eine Sanitärarmatur mit einem Ventilsitz, von dem ein Ventiloberteil der vorgenannten Art aufgenommen ist, wobei der Ventilsitz bodenseitig einen Spülwasserzulauf, einen Filterwasserzulauf und einen Spülwasserauslaufanschluss aufweist, wobei ein Filterwasserauslaufkanal angeordnet ist und wobei der Spülwasserzulaufanschluss mit dem ersten Einlasskanal, der Filterwasserzulaufanschluss mit dem zweiten Einlasskanal und der Spülwasserauslaufanschluss mit dem ersten Auslasskanal des Bodenstücks des Ventiloberteils verbunden ist.

In Ausgestaltung der Erfindung ist das Ventiloberteil gemäß Anspruch 6 ausgebildet, wobei der Filterauslaufkanal seitlich in dem Ventilsitz angeordnet ist, wobei das seitliche Fenster des Kopfstücks bevorzugt in Höhe des Filterauslaufkanals angeordnet ist.

In alternativer Ausgestaltung der Erfindung ist das Ventiloberteil gemäß Anspruch 7 ausgebildet, wobei der Filterauslaufkanal als bodenseitiger Filterwasserauslaufanschluss ausgebildet ist, der mit dem zweiten Auslasskanal des Bodenstücks des Ventiloberteils verbunden ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

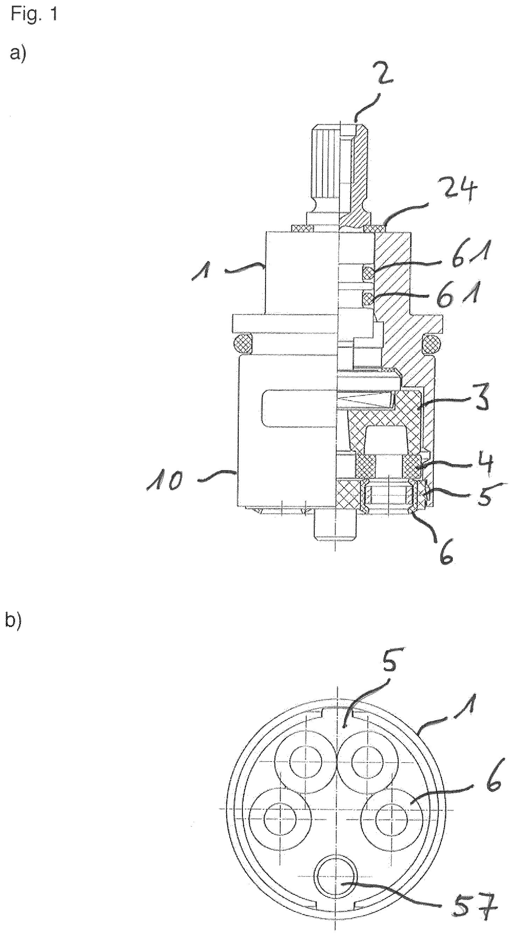

- Figur 1: die schematische Darstellung eines Ventiloberteils
a) im Längsteilschnitt,
b) in der Ansicht von unten;

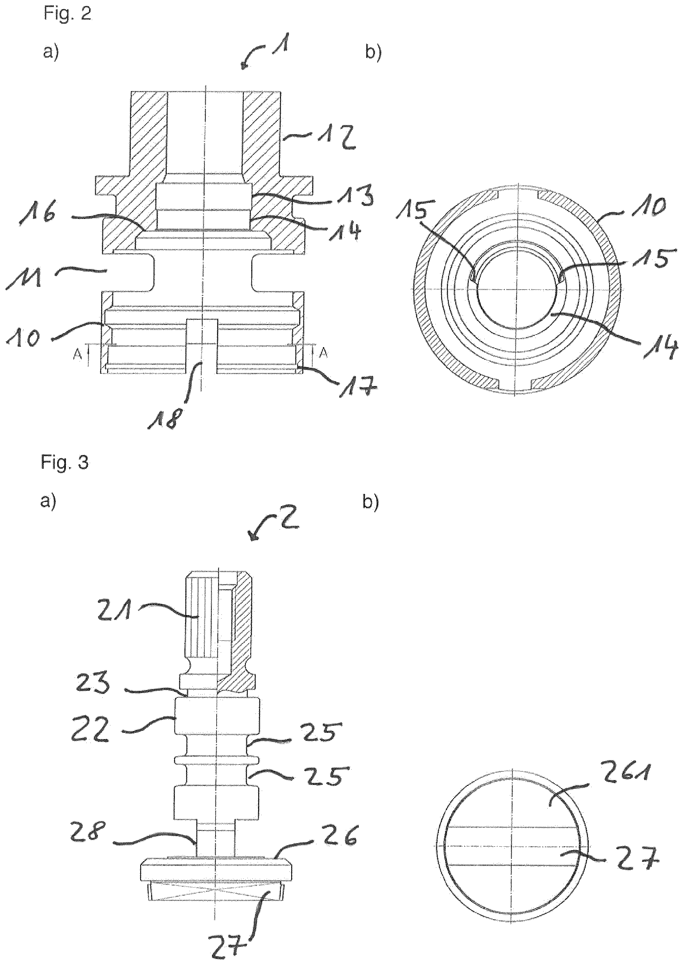

- Figur 2: die schematische Darstellung des Kopfstücks des Ventiloberteil aus Figur 1
a) im Längsschnitt,
b) Im Querschnitt A-A der Darstellung aus a);
- Figur 3: die schematische Darstellung der Spindel des Ventiloberteil aus Figur 1
a) im Längsteilschnitt
b) in der Ansicht von unten;
- Figur 4: die Darstellung der Steuerscheibe des Ventiloberteils aus Figur 1
a) in der Ansicht von unten,
b) in der Draufsicht,
c) im Längsschnitt;
- Figur 5: die Darstellung der Steuerscheibe des Ventiloberteils aus Figur 1 in einer alternativen Ausführungsform
a) in der Ansicht von unten,
b) in der Draufsicht,
c) im Längsschnitt;

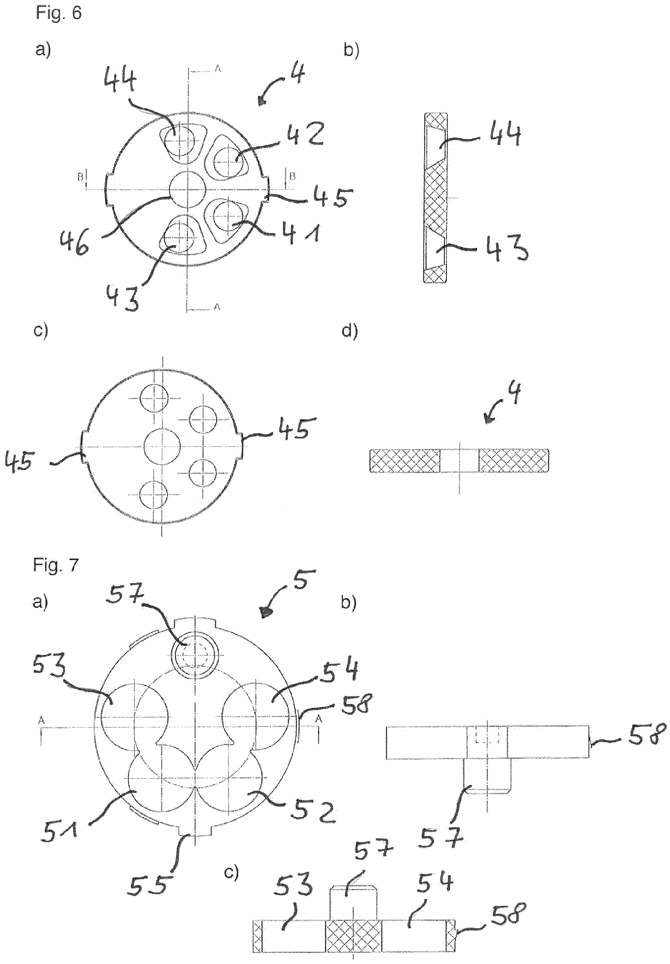

- Figur 6: die Darstellung der Durchlassscheibe des Ventiloberteils aus Figur 1
a) in der Ansicht von unten,
b) im Schnitt A-A,
c) in der Draufsicht
d) im Schnitt B-B;
- Figur 7: die Darstellung des Bodenstücks des Ventiloberteils aus Figur 1
a) in der Draufsicht,
b) in der Seitenansicht,
c) im Längsschnitt A-A der Darstellung aus a);

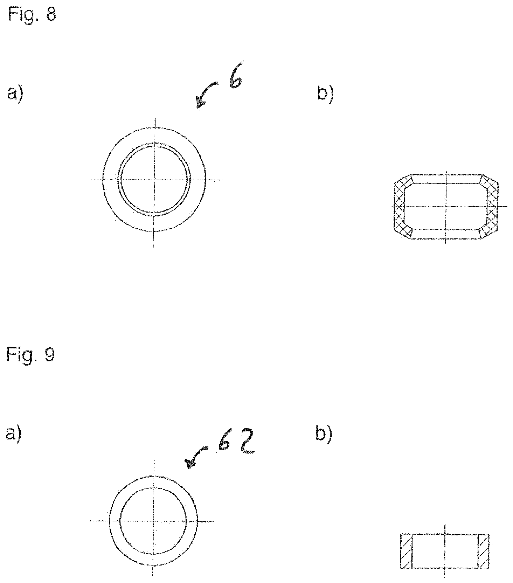

- Figur 8: die Darstellung einer Lippendichtung des Bodenstücks aus Figur 7
a) in der Draufsicht,
b) im Längsschnitt;
- Figur 9: die Darstellung eines Stützrings der Lippendichtung aus Figur 8
a) in der Draufsicht,
b) im Längsschnitt;
- Figur 10:: die schematische Darstellung der Überdeckung von Steuerscheibe gemäß Figur 4 und Durchlassscheibe (Scheibensteuerung) des Ventiloberteils aus Figur 1 in der Position
a) Spülwasserzulauf zu, Filterwasserzulauf zu,
b) Spülwasserzulauf zu, Filterwasserzulauf auf,
c) Spülwasserzulauf auf, Filterwasserzulauf zu;
- Figur 11:: die schematische Darstellung der Überdeckung von Steuerscheibe gemäß Figur 5 und Durchlassscheibe (Scheibensteuerung) des Ventiloberteils aus Figur 1 in der Position
a) Spülwasserzulauf zu, Filterwasserzulauf zu,
b) Spülwasserzulauf zu, Filterwasserzulauf auf,
c) Spülwasserzulauf auf, Filterwasserzulauf zu;
- Figur 12: die schematische Darstellung des Ventilsitzes einer Armatur zur Aufnahme des Ventiloberteils nach Figur 1 mit Scheibensteuerung gemäß Figur 11
a) Im Längsschnitt,
b) In der Draufsicht;
- Figur 13: die schematische Darstellung des Ventilsitzes einer Armatur zur Aufnahme des Ventiloberteils nach Figur 1 mit Scheibensteuerung gemäß Figur 11
a) Im Längsschnitt,
b) In der Draufsicht;
- Figur 14: die schematische Darstellung einer Einbau- und Anschlusssituation eines Ventiloberteils nach Figur 1 in einem Ventilsitz nach Figur 12 oder Figur 13.

Das als Ausführungsbeispiel gewählte Ventiloberteil besteht im Wesentlichen aus einem Kopfstück 1, das von einer in ihm radial geführten Spindel 2 mittig durchsetzt ist. Mit der Spindel 2 ist eine Steuerscheibe 3 formschlüssig verbunden und im Kopfstück 1 radial geführt. An dem der Spindel 2 abgewandten Seite der Steuerscheibe 3 ist eine Durchlassscheibe 4 drehfest in dem Kopfstück 1 angeordnet, an das sich ein Bodenstück 5 anschließt. Das Bodenstück 5 ist mit Lippendichtungen 6 versehen, über die das Bodenstück 5 gegen die Durchlassscheibe 4 sowie gegen den Ventilsitz 7 abgedichtet ist. Das Bodenstück 5 "schwebt" somit axial zwischen Ventilsitz 7 und Durchlassscheibe 4.

Das Kopfstück 1 besteht aus einem symmetrischen Hohlkörper, dessen beiden Stirnflächen offen sind. Im Ausführungsbeispiel ist das Kopfstück 1 als Messingdrehteil hergestellt. An seiner dem Bodenstück 5 zugewandten Seite weist das Kopfstück 1 einen hülsenartigen Teil 10 auf, in gegenüberliegend zwei Durchtrittsfenster 11 angeordnet sind. Endseitig ist in dem hülsenartigen Teil 10 innen eine umlaufende Rastnut 17 zur Aufnahme einer an das Bodenstück 5 angeformten Rastnase angeordnet. Weiterhin sind endseitig diametral zueinander zwei rechteckförmige Aussparungen 18 zur Aufnahme der Nasen 46, 55 der Durchlassscheibe 4 sowie des Bodenstücks 5 eingebracht.

An seinem den Durchtrittsfenstern 11 gegenüberliegenden Ende weist das Kopfstück 1 einen durchmesserreduzierten Abschnitt 12 auf, in dem innen eine umlaufende Nut 13 eingeformt ist. Die umlaufende Nut 13 begrenzend ist dieser vorgelagert ein kreisbogenförmiger Steg 14 angeformt, der einen Winkel von etwa 150 Grad umspannt und durch den zwei radiale Anschläge 15 gebildet sind. Die Anschläge 15 dienen der Drehbegrenzung der Spindel 2. Innen ist durch den durchmesserreduzierten Abschnitt dem Steg 15 ein Absatz 16 gebildet.

Die Spindel 2 ist im Wesentlichen massiv ausgeführt. Sie ist an ihrer dem Kopfstück 1 abgewandten Stirnseite außen als Außenvielkant 21 ausgeführt. Anschließend ist außen an der Spindel 2 eine Zylinderfläche 22 vorgesehen, mit der die Spindel 2 in dem Kopfstück 1 radial geführt ist. Zwischen der Zylinderfläche 22 und dem Außenvielkant 21 ist ein Einstich 23 vorgesehen, in den eine Wellensicherung 24 in Form eines Sprengrings federnd eingelegt ist. Die Wellensicherung 24 verhindert das Eindringen der Spindel 2 in das Kopfstück 1 über das vorgesehene Maß hinaus. Weiterhin sind in der Zylinderfläche 22 zwei Ringnuten 25 eingebracht, die O-Ringe 61 aufnehmen. Auf der dem Außenvielkant 21 entgegengesetzten Seite der Spindel 2 ist eine Scheibe 26 angeformt, die auf ihrer dem Außenvielkant 21 abgewandten Seite einen Mitnehmer 27 aufweist. Den Mitnehmer 27 einfassend ist auf der Scheibe 26 ein durchmesserreduzierter Absatz 261 geringer Höhe angeformt. Zwischen der Zylinderfläche 22 und der Scheibe 26 weist die Spindel einen quaderförmigen Abschnitt 28 auf, dessen gerade Flanken 29 parallel zueinander angeordnet sind. Die Flanken 29 wirken mit den durch den bogenförmigen Steg 14 gebildeten Anschlägen 15 derart zusammen, dass der Drehwinkel der Spindel 2 auf etwa 120 Grad begrenzt ist.

Die Steuerscheibe 3 ist im Wesentlichen als kreisrunde Keramikscheibe ausgebildet, in die beabstandet zu ihrem Außenrand benachbart zueinander zwei Verbindungskanäle 31 in Form jeweils einer kreisbogenförmigen Vertiefung eingebracht sind, die sich jeweils über einen Winkel von etwa 100 Grad erstrecken. Mittig ist in die Steuerscheibe 3 eine Sackbohrung 35 eingebracht. Auf ihrer der Spindel 2 zugewandten Seite weist die Steuerscheibe 3 einen quaderförmigen Eingriff 34 zur Aufnahme des Mitnehmers 27 der Spindel 2 auf. Der quaderförmige Eingriff 34 ist durch eine zylinderförmige Einsenkung 35 geringer Tiefe eingefasst, deren Innendurchmesser im Wesentlichen dem Außendurchmesser des von diesem Eingriff 32 aufgenommenen Absatzes 261 der Scheibe 26 der Spindel 2 entspricht.

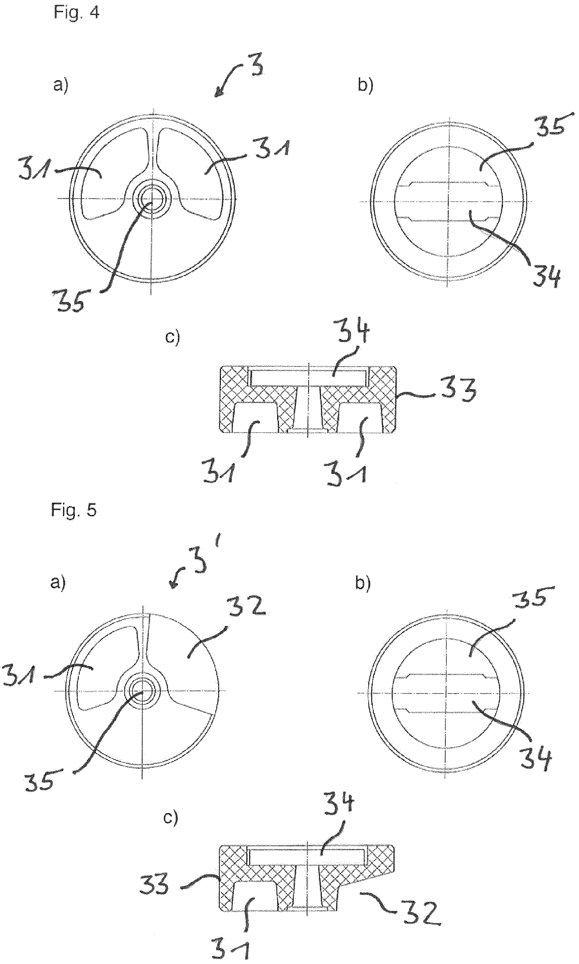

In Figur 5 ist eine weitere Ausgestaltung einer Steuerscheibe 3' für das Ventiloberteil dargestellt. Die auf ihrer der Spindel 2 zugewandten Seite identisch wie zuvor beschrieben ausgebildete Steuerscheibe 3' ist ebenfalls im Wesentlichen als kreisrunde Keramikscheibe ausgebildet, in die beabstandet zu ihrem Außenrand jedoch lediglich ein Verbindungskanal 31 in Form einer kreisbogenförmigen Vertiefung eingebracht ist, die sich über einen Winkel von etwa 100 Grad erstreckt. Dem Verbindungskanal 31 gegenüberliegend ist in die Steuerscheibe 3' ein kreissegmentförmiger Ausschnitt 32 eingebracht, der sich in axialer Richtung etwa über die Hälfte der Mantelfläche 33 der Steuerscheibe 3 erstreckt. Mittig ist in die Steuerscheibe 3' ebenfalls eine Sackbohrung 35 eingebracht.

Die Durchlassscheibe 4 ist im Wesentlichen als gegenüber der Steuerscheibe wesentlich dünnere kreisrunde Keramikscheibe ausgebildet, in die beabstandet zueinander vier trichterförmige Bohrungen 41, 42, 43, 44 eingebracht sind, deren Mittelpunkte auf einem gemeinsamen Halbkreisbogen angeordnet sind. Zur drehfesten Fixierung der Durchlassscheibe 4 in dem Kopfstück 1 sind an dieser seitlich diametral zueinander zwei rechteckförmige Nasen 45 zum Eingriff in die Aussparungen 18 des Kopfstücks 1 angeformt. Mittig ist die Durchlassscheibe 4 eine Bohrung 46 eingebracht. Die Bohrung 46 dient gemeinsam mit der Sackbohrung 35 der Steuerscheibe 3, 3' der Aufnahme und Ausspülung von sich gegebenenfalls mittig ansammelnden Abriebs.

Das Bodenstück 5 ist im Wesentlichen in Form einer kreisrunden Scheibe ausgebildet. In dem Bodenstück 5 sind jeweils in Form einer Bohrung ein erster Einlasskanal 51 und ein zweiter Einlasskanal 52 sowie ein erster Auslaufkanal 53 und ein zweiter Auslaufkanal 54 eingebracht, deren Mittelpunkte auf einem gemeinsamen Halbkreisbogen angeordnet sind. Im Ausführungsbeispiel sind dir Übergänge zwischen den Kanälen durchbrochen, um eine Aufnahme von vier ringförmigen Lippendichtungen 6 zu ermöglichen. Die Lippendichtungen 6 nehmen jeweils einen Stützring 62 auf und dichten das Bodenstück gegen die Durchlassscheibe 4 sowie gegen den Ventilsitz 7 einer Armatur ab.

Seitlich sind an dem Bodenstück 5 diametral zueinander zwei rechteckförmige Nasen 55 zum Eingriff in die Aussparungen 18 des Kopfstücks 1 angeformt. Seitlich der Nasen 55 sind weiterhin Rastnasen 58 zum Eingriff in die Rastnut 17 des Kopfstücks 1 angeformt. Diese Rastnasen 58 ermöglichen eine Rastverbindung zwischen dem Bodenstück 5 und dem Kopfstück 1. An seiner dem Kopfstück 1 abgewandten Unterseite ist an dem Bodenstück 5 weiterhin ein Positionierstift 57 zum Eingriff in eine mit diesem korrespondierende Positionierbohrung 75 des Ventilsitzes 7 einer Armatur angeformt.

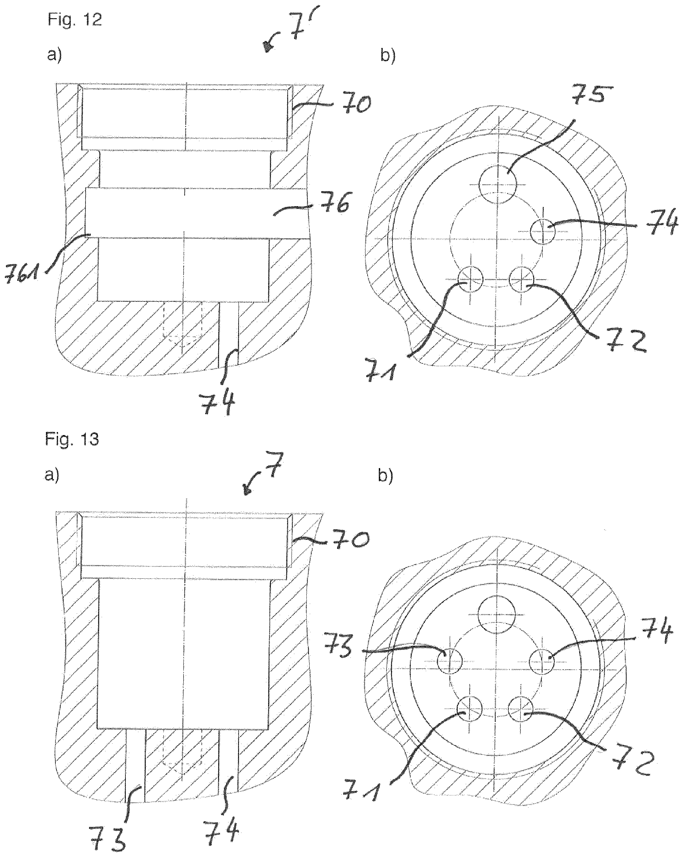

In Figur 12 ist beispielhaft ein Ventilsitz 7' einer Armatur zur Aufnahme des zuvor beschriebenen Ventiloberteils mit der Steuerscheibe 3' gemäß Figur 5 dargestellt. Der Ventilsitz 7' ist im Wesentlichen hohlzylinderförmig ausgebildet. An seinem oberen Ende ist ein Innengewinde 70 zum Einschrauben eines - nicht dargestellten - Befestigungsrings zur Fixierung eines Ventiloberteils angeordnet. Bodenseitig münden in dem Ventilsitz 7 ein Filterwasserzulaufanschluss 71, ein Spülwasserzulaufanschluss 72 sowie ein Filterwasserauslaufanschluss 74, deren Mittelachsen auf einem gemeinsamen Kreisbogen angeordnet sind. Weiterhin ist eine als Sacklochbohrung ausgebildete Positionierbohrung 75 zur Aufnahme des Positionierstiftes 57 des Bodenstücks 5 des Ventiloberteils eingebracht. Seitlich mündet in den Ventilsitz 7' eine Auslaufleitung 76, die etwa in Höhe der Durchtrittsfenster 11 des Kopfstücks 1 eines aufgenommenen Ventiloberteils angeordnet ist und in eine innen umlaufend in dem Ventilsitz 7' angeordnete ringförmige Nut 761 übergeht.

Beim Einsatz des Ventiloberteils mit der Steuerscheibe 3' gemäß Figur 5 in einem Ventilsitz gemäß Figur 12 ist der erste Auslaufkanal 52 des Bodenstücks 5 durch den Grund des Ventilsitzes 7' versperrt. Das Filterwasser gelangt über den vergrößert ausgebildeten kreissegmentförmigen Ausschnitt 32 der Steuerscheibe 3' durch das Durchtrittsfenster 11 des Kopfstücks 1 des Ventiloberteils über die umlaufende Nut 761 in die seitlich angeordnete Auslaufleitung 76.

In Figur 13 ist ein Ventilsitz 7 einer Armatur einer weiteren Ausführungsform zur Aufnahme des zuvor beschriebenen Ventiloberteils mit der Steuerscheibe 3 gemäß Figur 4 gezeigt. Bei diesem Ventilsitz 7 ist anstelle der bei dem Ventilsitz 7' gemäß Figur 12 vorhandenen seitlichen Auslaufleitung 76 mit ringförmiger Nut 761 bodenseitig ein zusätzlicher Filterwasserauslaufanschluss 73 angeordnet.

Beim Einsatz des Ventiloberteils mit der Steuerscheibe 3 gemäß Figur 4 in einem Ventilsitz gemäß Figur 13 ist das Durchtrittsfenster 11 des Kopfstücks 1 des Ventiloberteils durch die Seitenwand des Ventilsitzes 7 versperrt; der erste Auslaufkanal 53 des Bodenstücks 5 ist direkt mit dem bodenseitigen Filterwasserauslaufanschluss 73 des Ventilsitzes 7 verbunden.

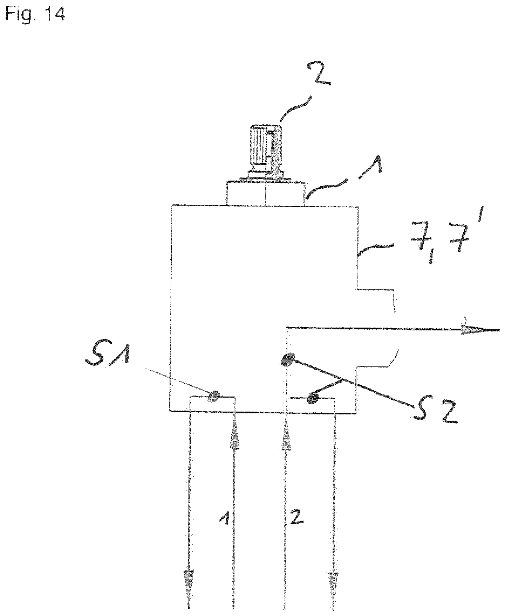

In Figur 14 sind die unterschiedlichen Schließstellungen schematisch dargestellt. Das Filterwasserwasser (Pfeil 1) gelangt über die erste Sperrstelle S1 in die Auslaufleitung 73 der Armatur. Das Spülwasser (Pfeil 2) gelangt über die zweite Sperrstelle S2 in die bodenseitige Auslaufleitung 74 der Armatur bzw. über die ringförmige Nut 761 in den seitlichen Auslaufkanal 76 der Armatur.

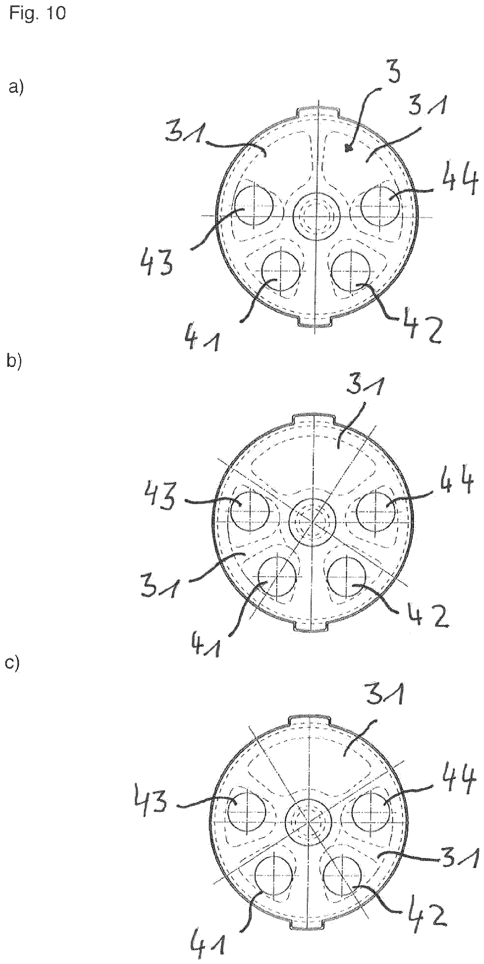

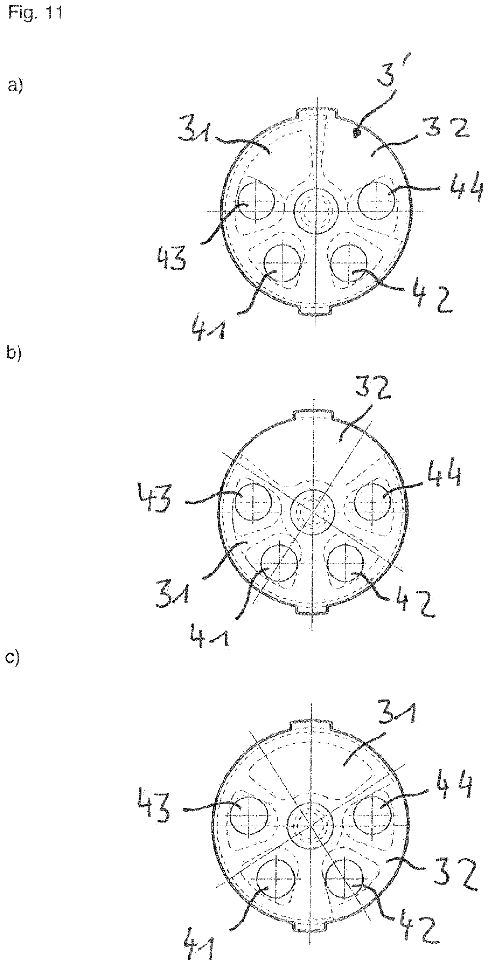

Im Ausführungsbeispiel weisen die Spindel 2 und das Kopfstück 1 miteinander korrespondierende Rastmittel auf, über welche die Spindel 2 in den unterschiedlichen Drehstellungen einrastbar ist, wie sie nachfolgend anhand der Figuren 10 und 11 beschrieben sind. Die Rastmittel sind durch zwei - nicht dargestellte - in dem Kopfstück 1 federnd gelagerte, zylindrisch ausgebildete Sperrelemente gebildet, die bei Drehung der Spindel 2 in zwei zugeordnete - nicht dargestellte - in der Spindel 2 eingebrachte Ausnehmungen einrastbar sind.

In Figur 10 sind verschiedene Stellungen der aus der über die Spindel 2 drehbaren Steuerscheibe 3 gemäß Figur 4 und der drehfest angeordneten Durchlassscheibe 4 gebildeten Scheibensteuerung schematisch dargestellt. In der Stellung gemäß Figur 10 a) ist die mit dem ersten Einlasskanal 51 des Bodenstücks 5 fluchtende erste Bohrung 41 sowie die mit dem zweiten Einlasskanal 52 des Bodenstücks 5 fluchtende zweite Bohrung 42 der Durchlassscheibe 4 von der Steuerscheibe 3 überdeckt. Der Filterwasserzulauf (Sperrstelle S1) sowie der Spülwasserzulauf (Sperrstelle S2) sind verschlossen. Es findet kein Wasserdurchlauf statt (geschlossene Stellung).

In der Stellung der Scheibensteuerung gemäß Figur 10 b) ist gegenüber der Stellung in Figur 10 a) die mit dem ersten Einlasskanal 51 des Bodenstücks 5 fluchtende erste Bohrung 41 der Durchlassscheibe 4 über den zugeordneten Verbindungskanal 31 der Steuerscheibe 3 mit dem mit der dritten Bohrung 43 fluchtenden Auslasskanal 53 des Bodenstücks 5 verbunden, wodurch der Filterwasserzufluss geöffnet ist (Sperrstelle S1 ist geöffnet). Der Spülwasserzufluss ist geschlossen (Sperrstelle S2 ist geschlossen).

In der Stellung der Scheibensteuerung gemäß Figur 10 c) ist gegenüber der Stellung in Figur 10 a) die mit dem zweiten Einlasskanal 52 des Bodenstücks 5 fluchtende zweite Bohrung 42 der Durchlassscheibe 4 über den zugeordneten Verbindungskanal 31 der Steuerscheibe 3 mit dem mit der vierten Bohrung 44 fluchtenden Auslasskanal 54 des Bodenstücks 5 verbunden, wodurch der Spülwasserzufluss geöffnet ist (Sperrstelle S2 ist geöffnet). Der Filterwasserzufluss ist geschlossen (Sperrstelle S1 ist geschlossen).

In Figur 11 sind verschiedene Stellungen der aus der über die Spindel 2 drehbaren Steuerscheibe 3' gemäß Figur 5 und der drehfest angeordneten Durchlassscheibe 4 gebildeten Scheibensteuerung schematisch dargestellt. In der Stellung gemäß Figur 11 a) ist die mit dem ersten Einlasskanal 51 des Bodenstücks 5 fluchtende erste Bohrung 41 sowie die mit dem zweiten Einlasskanal 52 des Bodenstücks 5 fluchtende zweite Bohrung 42 der Durchlassscheibe 4 von der Steuerscheibe 3' überdeckt. Der Filterwasserzulauf (Sperrstelle S1) sowie der Spülwasserzulauf (Sperrstelle S2) sind verschlossen. Es findet kein Wasserdurchlauf statt (geschlossene Stellung).

In der Stellung der Scheibensteuerung gemäß Figur 11 b) ist gegenüber der Stellung in Figur 11 a) die mit dem ersten Einlasskanal 51 des Bodenstücks 5 fluchtende erste Bohrung 41 der Durchlassscheibe 4 über den zugeordneten Verbindungskanal 31 der Steuerscheibe 3 mit dem mit der dritten Bohrung 43 fluchtenden Auslasskanal 53 des Bodenstücks 5 verbunden, wodurch der Filterwasserzufluss geöffnet ist (Sperrstelle S1 ist geöffnet). Der Spülwasserzufluss ist geschlossen (Sperrstelle S2 ist geschlossen).

In der Stellung der Scheibensteuerung gemäß Figur 11 c) sind gegenüber der Stellung in Figur 10 a) die mit dem zweiten Einlasskanal 52 des Bodenstücks 5 fluchtende zweite Bohrung 42 der Durchlassscheibe 4 und der mit der vierten Bohrung 44 fluchtende Auslasskanal 54 des Bodenstücks 5 über den Ausschnitt 32 der Steuerscheibe 3' verbunden, wodurch der Spülwasserzufluss geöffnet ist (Sperrstelle S2 ist geöffnet). Der Auslauf des Spülwassers erfolgt - je nach Gestaltung des Ventilsitzes 7, 7' - durch das Durchtrittsfenster 11 des Kopfstücks 1 und den mit der Nut 761 verbundenen Auslaufkanal 76 oder durch den mit dem Spülwasserauslaufanschluss 74 verbundenen zweit Auslaufkanal 54 des Bodenstücks 5. Der Filterwasserzufluss ist geschlossen (Sperrstelle S1 ist geschlossen).

Selbstverständlich können die Anschlüsse des Ventilsitzes auch im Gegensatz zu den zuvor beschriebenen Ausführungsbeispielen vertauscht sein, so dass beispielsweise Spülwasser aus dem seitlichen Auslaufkanal 76 entnehmbar ist.

## Patentansprüche

1. Ventiloberteil zur gleichzeitigen Steuerung zweier voneinander getrennter Fluidströme für Sanitärarmaturen, umfassend ein Kopfstück (1), das ein zwei Einlasskanäle (52, 51) und wenigstens einen ersten Auslaufkanal (53) aufweisendes Bodenstück (5) aufnimmt, sowie eine Scheibensteuerung mit einer Steuerscheibe (3), welche über eine drehbar gelagerte Spindel (2) relativ zu einer drehfest angeordneten Durchlassscheibe (4) verdrehbar ist, wobei die Steuerscheibe (3) formschlüssig mit der Spindel (2) verbunden ist und im Kopfstück (1) radial geführt ist, wobei ein zweiter Auslaufkanal angeordnet ist, **dadurch gekennzeichnet, dass** in der Steuerscheibe (3, 3') Verbindungskanäle (31, 32) derart angeordnet sind, dass in zwei unterschiedlichen Drehstellungen der Steuerscheibe (3) relativ zur Durchlassscheibe (4) alternativ ein erster Einlasskanal (51) und der erste Auslaufkanal (53) oder der zweite Einlasskanal (52) mit dem zweiten Auslaufkanal (54) verbindbar ist, wobei zugleich der jeweils andere Einlasskanal (52, 51) verschlossen ist.

2. Ventiloberteil nach Anspruch 1, **dadurch gekennzeichnet, dass** die Steuerscheibe (3, 3') derart ausgebildet ist, dass in einer weiteren Drehstellung der Steuerscheibe (3, 3') relativ zur Durchlassscheibe (4) beide Einlasskanäle (51, 52) verschließbar sind.

3. Ventiloberteil nach Anspruch 1 oder 2, **dadurch gekennzeichnet, dass** die Spindel (2) und das Kopfstück (1) miteinander korrespondierende Rastmittel aufweisen, über welche die Spindel (2) in den unterschiedlichen Drehstellungen einrastbar ist.

4. Ventiloberteil nach Anspruch 3, **dadurch gekennzeichnet, dass** die Rastmittel durch wenigstens ein in dem Kopfstück (1) oder an der Spindel (2) federnd gelagertes, vorzugsweise zylindrisch oder kugelförmig ausgebildetes Sperrelement gebildet sind, das bei Drehung der Spindel (2) in wenigstens eine in die Spindel (2) bzw. in das Kopfstück (1) eingebrachte Ausnehmung einrastbar ist.

5. Ventiloberteil nach einem der vorgenannten Ansprüche, **dadurch gekennzeichnet, dass** wenigstens ein Verbindungskanal (31) kreisbogenförmig ausgebildet ist.

6. Ventiloberteil nach einem der vorgenannten Ansprüche, **dadurch gekennzeichnet, dass** der zweite Auslaufkanal durch wenigstens ein in dem Kopfstück (1) eingebrachtes seitliches Fenster (11) gebildet ist, wobei ein Verbindungskanal durch einen Ausschnitt (32) gebildet ist, über den der zweite Einlasskanal (52) mit dem seitlichen Fenster (11) des Kopfstücks (1) in einer Drehstellung der Steuerscheibe (3') verbindbar ist.

7. Ventiloberteil nach einem der Ansprüche 1 bis 5, **dadurch gekennzeichnet, dass** der zweite Auslaufkanal (54) zusätzlich zu dem ersten Auslaufkanal (53) in dem Bodenstück (5) angeordnet ist, wobei in der Steuerscheibe zwei Verbindungskanäle (31) eingebracht sind, über die der erste Einlasskanal (51) und der erste Auslaufkanal (53) in einer Drehstellung der Steuerscheibe (3) relativ zur Durchlassscheibe (4) sowie der zweite Einlasskanal (52) und der zweite Auslaufkanal (54) in einer weiteren Drehstellung der Steuerscheibe (3) relativ zur Durchlassscheibe (4) verbindbar sind.

8. Ventiloberteil nach einem der vorgenannten Ansprüche, **dadurch gekennzeichnet, dass** das Kopfstück (1) aus Metall, vorzugsweise aus Messing hergestellt ist.

9. Ventiloberteil nach einem der vorgenannten Ansprüche, **dadurch gekennzeichnet, dass** innerhalb des Kopfstücks (1) zwei Anschläge (15) angeordnet sind, durch welche die Rotation der Spindel (2) auf einen Drehwinkel begrenzt ist.

10. Ventiloberteil nach Anspruch 9, **dadurch gekennzeichnet, dass** die Spindel (2) einen weitgehend quaderförmigen oder kreissektorförmigen Abschnitt (28) aufweist, der zwei parallele oder winklig zueinander angestellte gerade Flanken (29) aufweist, die an jeweils einen Anschlag (15) des Kopfstücks (1) anschlagbar sind, wodurch der Drehwinkel der Spindel (2) begrenzt ist.

11. Ventiloberteil nach Anspruch 10, **dadurch gekennzeichnet, dass** die Flanken (29) derart mit den Anschlägen (15) des Kopfstücks zusammenwirken, dass der maximale Drehwinkel der Spindel (2) auf zwischen 90 und 120 Grad, bevorzugt auf 115 Grad begrenzt ist.

12. Sanitärarmatur mit einem Ventilsitz, das ein Ventiloberteil nach einem der vorgenannten Ansprüche aufnimmt, wobei der Ventilsitz (7) bodenseitig einen Spülwasserzulauf (71), einen Filterwasserzulauf (72) und einen Spülwasserauslaufanschluss (73) aufweist, wobei ein Filterwasserauslaufkanal angeordnet ist und wobei der Spülwasserzulaufanschluss (71) mit dem ersten Einlasskanal (51), der Filterwasserzulaufanschluss (72) mit dem zweiten Einlasskanal (52) und der Spülwasserauslaufanschluss (73) mit dem ersten Auslasskanal (53) des Bodenstücks (5) des Ventiloberteils verbunden ist.

13. Sanitärarmatur nach Anspruch 12, **dadurch gekennzeichnet, dass** das Ventiloberteil gemäß Anspruch 6 ausgebildet ist, wobei der Filterauslaufkanal 76 seitlich in dem Ventilsitz 7 angeordnet ist, wobei das seitliche Fenster 11 des Kopfstücks 1 bevorzugt in Höhe des Filterauslaufkanals 76 angeordnet ist

14. Sanitärarmatur nach Anspruch 12, **dadurch gekennzeichnet, dass** das Ventiloberteil gemäß Anspruch 7 ausgebildet ist, wobei der Filterauslaufkanal als bodenseitiger Filterwasserauslaufanschluss (74) ausgebildet ist, der mit dem zweiten Auslasskanal (54) des Bodenstücks (5) des Ventiloberteils verbunden ist.

## Claims

1. Valve top for the simultaneous control of two fluid flows separated from one another for sanitary fittings comprising a head piece (1) which receives a base piece (5) having two inlet channels (52, 51) and at least one first outlet channel (53) as well as a disc control having a control disc (3) which is rotatable relative to a non-rotatably arranged passage disc (4) via a rotatably mounted spindle (2), wherein the control disc (3) is positively connected to the spindle (2) and is radially guided in the head piece (1), wherein a second outlet channel is arranged, **characterised in that** in the control disc (3, 3') connecting channels (31, 32) are arranged in a manner that in two different rotational positions of the control disc (3) relative to the passage disc (4) alternatively a first inlet channel (51) and the first outlet channel (53) are connectable or the second inlet channel (52) is connectable to the second outlet channel (54), wherein simultaneously the respective other inlet channel (52, 51) is closed.

2. Valve top according to claim 1, **characterised in that** the control disc (3, 3') is designed in a manner that in a further rotational position of the control disc (3, 3') relative to the passage disc (4) both inlet channels (51, 52) are closable.

3. Valve top according to claim 1 or 2, **characterised in that** the spindle (2) and the head piece (1) have mutually corresponding latching means, via which the spindle (2) is latchable in the different rotational positions.

4. Valve top according to claim 3, **characterised in that** the latching means are formed by at least one preferably cylindrically or spherically designed blocking element resiliently mounted in the head piece (1) or at the spindle (2), which is engageable in at least one recess inserted in the spindle (2) or in the head piece (1) when the spindle (2) is rotated.

5. Valve top according to one of the previous claims, **characterised in that** the at least one connecting channel (31) is arcuate.

6. Valve top according to one of the previous claims, **characterised in that** the second outlet channel is formed by at least one lateral window (11) inserted in the head piece (1), wherein a connecting channel is formed by a cut-away portion (32), via which the second inlet channel (52) is connectable to the lateral window (11) of the head piece (1) in one rotational position of the control disc (3').

7. Valve top according to any of claims 1 to 5, **characterised in that** the second outlet channel (54) is arranged in the base piece (5) in addition to the first outlet channel (53), wherein in the control disc two connecting channels (31) are inserted, via which the first inlet channel (51) and the first outlet channel (53) are connectable in one rotational position of the control disc (3) relative to the passage disc (4) and the second inlet channel (52) and the second outlet channel (54) are connectable in a further rotational position of the control disc (3) relative to the passage disc (4).

8. Valve top according to any of the previous claims, **characterised in that** the head piece (1) is made of metal, preferably of brass.

9. Valve top according to one of the previous claims, **characterised in that** inside the head piece (1) two stops (15) are arranged, by means of which the rotation of the spindle (2) is limited to a rotation angle.

10. Valve top according to claim 9, **characterised in that** the spindle (2) has a mostly cuboid or circular sector-shaped section (28), which has two parallel or angular straight flanks (29), which can be attached to a respective stop (15) of the head piece (1), whereby the rotation angle of the spindle (2) is limited.

11. Valve top according to claim 10, **characterised in that** the flanks (29) interact with the stops (15) of the head piece in a manner that the maximum rotation angle of the spindle (2) is limited to between 90 and 120, preferably to 115 degrees.

12. Sanitary fitting having a valve seat receiving a valve top according to one of the previous claims, wherein the valve seat (7) has a dishwater feed (71), a filtered water feed (72) and a dishwater outlet connection (73) at the bottom, wherein a filtered water outlet channel is arranged and wherein the dishwater inlet connection (71) is connected to the first inlet channel (51), the filtered water inlet connection (72) to the second inlet channel (52) and the dishwater outlet connection (73) to the first outlet channel (53) of the base piece (5) of the valve top.

13. Sanitary fitting according to claim 12, **characterised in that** the valve top is designed according to claim 6, wherein the filter outlet channel 76 is arranged laterally in the valve seat 7, wherein the lateral window 11 of the head piece 1 is preferably arranged at the height of the filter outlet channel (76).

14. Sanitary fitting according to claim 12, **characterised in that** the valve top is designed according to claim 7, wherein the filter outlet channel is designed as a bottom filtered water outlet connection (74), which is connected to the second outlet channel (54) of the base piece (5) of the valve top.

## Revendications

1. Partie supérieure de soupape pour piloter simultanément deux flux de fluides séparés l'un de l'autre, pour robinetteries sanitaires, comprenant une pièce têtière (1) recevant une pièce de fond (5) qui présente deux canaux d'admission (52, 51) et au moins un premier canal de sortie (53), ainsi qu'une commande composée d'un disque de commande (3) pouvant tourner, via une broche (2) en appui rotatif, relativement à un disque de passage (4) disposé sans pouvoir tourner, sachant que le disque de commande (3) est relié à la broche (2) par adhérence de formes et est guidé radialement dans la pièce têtière (1), sachant qu'un deuxième canal de sortie est disposé, **caractérisée en ce que** dans le disque de commande (3, 3'), des canaux de liaison (31, 32) sont disposés de sorte que dans deux positions de rotation différentes du disque de commande (3), relativement au disque de passage (4), il est possible de relier, à titre d'alternative, un premier canal d'admission (51) et le premier canal de sortie (53), ou le deuxième canal d'admission (52) et le deuxième canal de sortie (54), sachant que simultanément l'autre canal d'admission (52, 51) respectif est obturé.

2. Partie supérieure de soupape selon la revendication 1, **caractérisée en ce que** le disque de commande (3, 3') est configuré de telle sorte que dans une autre position de rotation du disque de commande (3, 3') relativement au disque de passage (4), les deux canaux d'admission (51, 52) sont obturables.

3. Partie supérieure de soupape selon la revendication 1 ou 2, **caractérisée en ce que** la broche (2) et la pièce têtière (1) présentent des crans correspondants les uns avec les autres via lesquels la broche (2) peut encranter dans les différentes positions de rotation.

4. Partie supérieure de soupape selon la revendication 3, **caractérisée en ce que** les moyens de crantage sont formés par au moins un élément de blocage - en appui amorti dans la pièce têtière (1) ou contre la broche (2) - de préférence cylindrique ou sphérique, élément qui lors d'une rotation de la broche (2) peut encranter dans au moins un évidement ménagé dans la broche (2) et/ou dans la pièce têtière (1).

5. Partie supérieure de soupape selon l'une des revendications précédentes, **caractérisée en ce qu'**au moins un canal de liaison (31) est configuré en arc de cercle.

6. Partie supérieure de soupape selon l'une des revendications précédentes, **caractérisée en ce que** le deuxième canal de sortie est formé par au moins une fenêtre (11) latérale ménagée dans la pièce têtière (1), sachant qu'un canal de liaison est formé par une découpe (32) via laquelle le deuxième canal d'admission (52) peut être relié avec la fenêtre latérale (11) de la pièce têtière (1) lorsque le disque de commande (3') se trouve en position tournée.

7. Partie supérieure de soupape selon l'une des revendications 1 à 5, **caractérisée en ce que** le deuxième canal de sortie (54) est disposé en plus du premier canal de sortie (53) dans la pièce de fond (5), sachant que dans le disque de commande sont ménagés deux canaux de liaison (31) via lesquels le premier canal d'admission (51) et le premier canal de sortie (53) sont reliables lorsque le disque de commande (3) se trouve en position tournée relativement au disque de passage (4) et via lesquels le deuxième canal d'admission (52) et le deuxième canal de sortie (54) sont reliables lorsque le disque de commande (3) se trouve dans une position tournée supplémentaire relativement au disque de passage (4).

8. Partie supérieure de soupape selon l'une des revendications précédentes, **caractérisée en ce que** la pièce têtière (1) est fabriquée en métal, de préférence en laiton.

9. Partie supérieure de soupape selon l'une des revendications précédentes, **caractérisée en ce qu'**à l'intérieur de la pièce têtière (1) sont disposées deux butées (15) qui limitent la rotation de la broche (2) à un angle de rotation.

10. Partie supérieure de soupape selon la revendication 9, **caractérisée en ce que** la broche (2) présente un segment (28) de forme principalement quadrangulaire ou en arc de cercle qui présente deux flancs droits (29) disposés parallèles ou inclinés selon un angle l'un par rapport à l'autre, flancs qui peuvent venir heurter une butée (15) respective de la pièce têtière (1), faisant que l'angle de rotation de la broche (2) est limité.

11. Partie supérieure de soupape selon la revendication 10, **caractérisée en ce que** les flancs (29) interagissent avec les butées (15) de la pièce têtière de sorte que l'angle de rotation maximum de la broche (2) est limité à une plage comprise entre 90 et 120 degrés, et de préférence limité à 115 degrés.

12. Robinetterie sanitaire comprenant un siège de soupape recevant une partie supérieure de soupape selon l'une des revendications précédentes, sachant que le siège (7) de soupape présente, du côté du fond, une arrivée d'eau de rinçage (71), une arrivée d'eau pour filtre (72) et un raccord de sortie d'eau de rinçage (73), sachant qu'est disposé un canal de sortie d'eau de filtre et sachant que le raccord d'arrivée d'eau de rinçage (71) est relié avec le premier canal d'admission (51), que le raccord d'arrivée d'eau de filtre (72) est relié avec le deuxième canal d'admission (52) et que le raccord de sortie d'eau de rinçage (73) est relié avec le premier canal de sortie (53) de la pièce de fond (5) de la partie supérieure de soupape.

13. Robinetterie sanitaire selon la revendication 12, **caractérisée en ce que** la partie supérieure de soupape est configurée conformément à la revendication 6, sachant que le canal de sortie du filtre (76) est disposé dans le siège (7) de soupape, sachant que la fenêtre (11) latérale de la pièce têtière (1) se trouve de préférence à hauteur du canal de sortie du filtre (76).

14. Robinetterie sanitaire selon la revendication 12, **caractérisée en ce que** la partie supérieure de soupape est configurée conformément à la revendication 7, sachant que le canal de sortie du filtre est configuré en raccord de sortie d'eau du filtre (74) du côté du fond, raccord qui est relié au deuxième canal de sortie (54) de la pièce de fond (5) de la partie supérieure de soupape.
